# FASCICULE DE BREVET EUROPEEN

(11) **EP 0 437 157 B1**
(45) Date de publication et mention de la délivrance du brevet: **28.07.1993**
(21) Numéro de dépôt: 90460051.7
(22) Date de dépôt: 19.12.1990
(51) Int. Cl.: F16H 55/56

(54) **Poulie à variateur de vitesse équipée d'une membrane de transmission**
Riemenscheibe für ein stufenloses Getriebe mit einer drehmomentübertragenden Membran
Pulley for continuously variable transmission, with a torque transmitting membrane

(30) Priorité: 12.01.1990 FR 9000471
(43) Date de publication de la demande: 17.07.1991
(73) Titulaire: Société Canadienne POWERBLOC IBC Canada, Drummondville, Québec 2JC 6X9 (CA)
(72) Inventeur: Gourdon, Eric, F-85590 Les Epesses (FR)
(74) Mandataire: Le Guen, Louis François

(56) Documents cités:
- EP-A- 0 050 920
- EP-A- 0 180 089
- CA-A- 1 212 559
- FR-A- 2 504 635

## Description

L' invention concerne une poulie à variateur de vitesse équipée d'une membrane de transmission et utilisée, notamment, dans une transmission à vitesse variable du type à poulies en "V" et courroie trapézoïdale. Des transmissions de ce type sont, par exemple, utilisées dans des scooters de neige, des motocyclettes, des véhicules utilitaires ou de loisir ou des voitures sans permis ou de type TQM.

Elles comportent en général une poulie menante solidaire d'un arbre moteur et une poulie menée entraînée en rotation par une courroie passant dans les gorges des deux poulies. La poulie menante est équipée de manière que le diamètre d'enroulement de la courroie varie automatiquement en fonction de la vitesse de rotation de la poulie. La courroie ayant une longueur fixe, la poulie menée a un diamètre d'enroulement qui varie en sens inverse de la poulie menante. Sous l'effet conjugué de ces deux variations, le rapport des vitesses de rotation des deux poulies est modifié selon les changements de diamètre de la poulie menante.

Des exemples de poulies menantes du type mentionné précédemment sont décrits dans les documents FR-A-2 504 635 et CA-A-1 212 559.

Elles comprennent, en général, deux flasques coaxiaux à flanc tronconique en regard l'un de l'autre et formant entre eux une gorge en forme de "V". Un flasque, dit par la suite flasque fixe, est fixe en rotation et en translation sur l'arbre d'entraînement de la poulie et l'autre, dit flasque mobile, peut coulisser axialement sur ledit arbre. A l'arrière du flasque mobile, est prévue une rampe oblique dont la surface tournée vers l'axe de l'arbre fait face à une seconde rampe oblique d' un capot de réaction solidaire de l'arbre d' entraînement de la poulie. Des masselottes prévues dans des logements du flasque mobile et dans des logements du capot de réaction peuvent se déplacer radialement et sont guidées, dans ce mouvement, par les parois latérales de ces logements.

Lorsque l'arbre de la poulie tourne, il entraîne en rotation le flasque fixe et le capot de réaction. Celui-ci transmet son mouvement de rotation, par les parois latérales des logements du capot de réaction, aux masselottes qui entraînent à leur tour, aux moyens des parois latérales des logements du flasque mobile, ledit flasque mobile. Par ailleurs, du fait qu'elles tournent, les masselottes sont soumises à l'action de forces centrifuges et, se déplaçant radialement, prennent respectivement appui sur les deux rampes du flasque mobile et du capot de réaction. De par leur forme en trapèze, elles exercent une poussée axiale sur le flasque mobile qui coulisse alors vers le flasque fixe. Pour une vitesse donnée de rotation de la poulie, un équilibre est atteint lorsque cette poussée axiale est contrebalancée par une force de rappel axiale exercée par un ressort de rappel monté entre le flasque mobile et un épaulement de l'arbre de la poulie. Suivant cet équilibre, la courroie de section trapézoïdale voit son diamètre d'enroulement prendre une valeur plus ou moins grande selon la vitesse de rotation de la poulie.

En dynamique, lorsque la vitesse de rotation croît, les forces centrifuges sur les masselottes augmentent proportionnellement. La poussée axiale de celles-ci sur les rampes augmente également et l'équilibre est déplacé vers un rapprochement des deux flasques. Le diamètre d'enroulement de la courroie croît donc. Inversement, lorsque la vitesse diminue, la poussée axiale des masselottes s'affaiblit et l'équilibre est déplacé vers un éloignement des deux flasques. Le diamètre d'enroulement de la courroie décroît donc.

En fait, au contact de chacune des masselottes avec les rampes correspondantes et avec les parois des logements qui les reçoivent, sont engendrées des forces de frottement radiales qui s'opposent au mouvement radial des masselottes ainsi que des forces de frottement axiales qui s'opposent au déplacement axial du flasque mobile. Ces forces axiales engendrent un effet d'hystérésis dans le fonctionnement de la poulie. En effet, lorsque la vitesse augmente, le flasque fixe se déplace vers le flasque mobile. Les forces axiales de réaction s'opposent à ce mouvement du flasque mobile et se soustraient aux poussées axiales exercées par les masselottes. L'équilibre est donc déplacé vers un moindre rapprochement des deux flasques et le diamètre d'enroulement est donc inférieur à ce qu'il devrait être sans ces forces de frottement. Par contre, lorsque la vitesse de rotation décroît, le flasque mobile se déplace en s'éloignant du flasque fixe. Les forces de frottement axiales qui s'opposent à ce mouvement, tendent donc, dans ce cas, à maintenir les deux flasques rapprochés. Le diamètre d'enroulement est donc supérieur à ce qu'il devrait être sans ces forces de frottement.

Dans les dispositifs de l'art antérieur, l'effet d'hystérésis est important car les forces de réaction axiales ont des valeurs élevées. En effet, pour pouvoir entraîner en rotation le flasque mobile, on prévoit des moyens, tels que les parois des logements décrits ci-dessus. Or, ces moyens sont, en général, constitués de plusieurs pièces qui glissent les unes par rapport aux autres et sont, de ce fait, le siège de forces de frottement dont les valeurs sont suffisamment élevées pour contribuer, de manière significative, à cet effet d'hystérésis.

On notera qu'une transmission dont la poulie menante présente un effet d'hystérésis trop important diminue les performances des véhicules équipés d'une telle transmission.

Le but de l'invention est donc de proposer des moyens qui permettent d'entraîner le flasque mobile d'une poulie menante, cette poulie menante présentant alors, grâce à ces moyens, un effet d'hystérésis minimisé.

A cet effet, l'invention concerne une poulie menante d'une transmission à vitesse variable dont la poulie menée est entraînée par une courroie de section trapézoïdale la reliant à ladite poulie menante, ladite poulie menante comprenant deux flasques coaxiaux dont les flancs tronconiques sont en regard l'un de l'autre pour former entre eux une gorge en forme de "V" dans laquelle est passée la courroie trapézoïdale, l'un des flasques, dit flasque fixe, est fixé sur l'extrémité d'un moyeu solidaire d'un arbre d'entraînement de la poulie et l'autre flasque pouvant coulisser axialement sur ledit moyeu, un capot de réaction fixé sur l'autre extrémité du moyeu, ledit capot de réaction étant constitué d'un disque rabattu vers l'axe selon une courbure appropriée, la surface intérieure du capot étant tournée vers les deux flasques, ledit flasque mobile présentant, uniformément répartis autour de son axe, des logements à l'intérieur de chacun desquels est fixée une rampe linéaire oblique dont la surface tournée vers l'axe fait face à la surface interne du capot de réaction et qui présentent chacun des parois latérales constituant des guides radiaux en translation pour des masselottes prenant appui, d'une part, sur chacune des rampes des logements du flasque mobile et, d'autre part, contre la surface interne du capot de réaction, les masselottes étant soumises, lorsque l'arbre d'entraînement de la poulie tourne, à des forces centrifuges qui font se déplacer le flasque mobile vers le flasque fixe, un ressort de rappel étant prévu pour exercer une force s'opposant au rapprochement des deux flasques.

Selon une caractéristique de l'invention, le flasque mobile est rendu solidaire en rotation de l'arbre d'entraînement au moyen d'une membrane de caoutchouc qui le relie au capot de réaction en présentant une partie de révolution dont la section est cintrée en forme de "C" ou de "C" inversé, chaque aile du "C" pouvant glisser axialement l'une par rapport à l'autre avec un effort minimum correspondant à la résistance du matériau de la membrane à se cintrer.

Selon une autre caractéristique de l'invention, la membrane est fixée par une de ses faces sur la paroi interne d'une partie annulaire se trouvant à la périphérie du flasque mobile et prolongeant celui-ci dans une direction opposée à son flanc tronconique et, par la même face, sur une partie annulaire à la périphérie du capot de réaction, la membrane présentant une section selon tout plan radial en forme de "C" inversé.

Selon une autre caractéristique de l'invention, la membrane est fixée par une de ses faces sur la paroi interne d'une partie annulaire se trouvant à la périphérie du flasque mobile et prolongeant celui-ci dans une direction opposée à son flanc tronconique et, par la même face, sur une partie annulaire à la périphérie du capot de réaction, la membrane présentant une section selon tout plan radial en forme de "C".

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe d'une poulie menante d'une transmission à vitesse variable selon l'invention, la partie supérieure de cette vue montrant un premier état d'équilibre extrême de la poulie et la partie inférieure un second état d'équilibre extrême, et

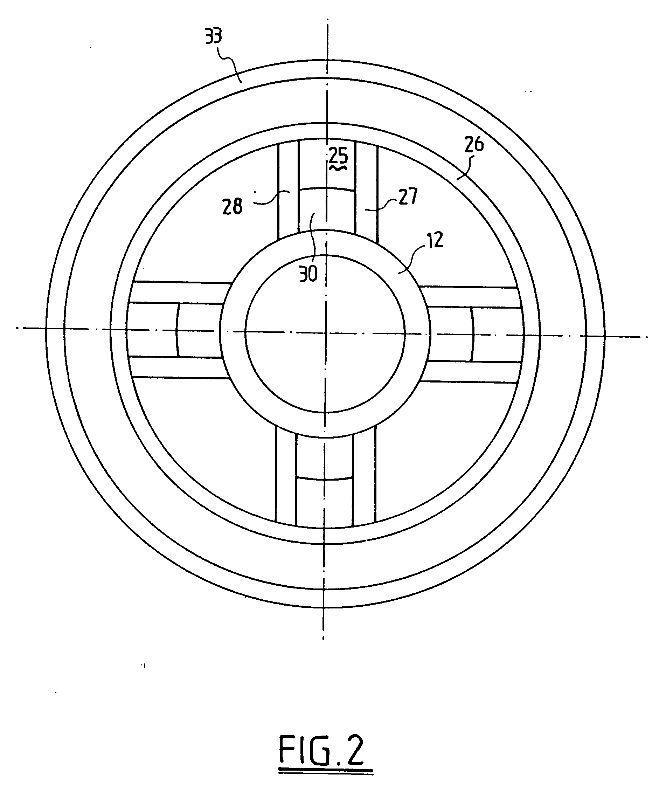

la Fig. 2 est une vue selon l'axe de la face d'un flasque mobile opposée à celle de son flanc tronconique.

Une poulie menante d'une transmission à variation de vitesses automatique selon l'invention comprend deux flasques coaxiaux 1, 2 dont les flancs tronconiques 3, 4 sont en regard l'un de l'autre pour former entre eux une gorge 5 en forme de "V". Dans celle-ci, on passe une courroie 6 de section trapézoïdale assurant la transmission de couple à une poulie menée (non représentée). Le flasque 1 est fixé coaxialement à une extrémité d'un moyeu 7 percé d'un trou axial 8 dans lequel est monté, à force, le bout d'un arbre d'entraînement 9. Des moyens (non représentés), tels qu'une clavette ou le bout de l'arbre 9 conique, peuvent être prévus pour augmenter la tenue en rotation du moyeu 7 sur l'arbre d'entraînement 9.

Le moyeu 7 est divisé en deux parties cylindriques 7, 10 dont l'une 7, tournée vers l'arbre d'entraînement 9, présente un diamètre supérieur à l'autre 10. Selon une seconde variante de réalisation, les deux parties 7, 10 ont le même diamètre.

Partant de sa face 11 opposée à celle de son flanc tronconique 4, le flasque 2 est prolongé axialement par un corps annulaire 12 formant un trou borgne 13 dont la paroi du fond 14 est en prolongement du flanc tronconique 4. La paroi 14 est percée d'un trou axial dans lequel est monté, à force, un palier 15 dont le diamètre intérieur est égal, au jeu près, au diamètre de la partie cylindrique 7 du moyeu. Le palier 15 est constitué dans un matériau à faible coefficient de frottement.

A l'extrémité du corps annulaire 12 où débouche le trou borgne 13 et sur son diamètre intérieur, est monté un anneau 16 percé d'un trou borgne 17 dont l'intérieur est tourné vers le trou borgne 13. De la paroi du fond du trou 17, part, en direction du trou 13, un manchon cylindrique 18 percé d'un trou axial dont le diamètre est égal, au jeu près, au diamètre externe de la partie cylindrique 10 du moyeu 7. Autour du manchon 18, est prévu un ressort de rappel hélicoïdal 19 dont une première spire prend appui contre la paroi du fond du trou borgne 17 et la spire de l'extrémité opposée prend appui contre une coupelle 20. Celle-ci est plaquée par le ressort de rappel 19 contre un épaulement 21 formé à l'intersection des deux parties cylindriques 7, 10 du moyeu.

Si, selon la seconde variante de réalisation, les diamètres des parties 7, 10 sont égaux, la coupelle 20 est plaquée contre un circlips (non représenté) qui est monté à l'intersection de ces deux parties.

A l'extrémité du moyeu 7 opposée à celle qui reçoit le flasque 1, est fixé, au moyen d'une vis 22, un capot de réaction 23. Des moyens (non représentés) peuvent être prévus pour améliorer la tenue en rotation du capot de réaction 23 sur le moyeu 7, tels que des goupilles, cannelures, méplats, etc. Le capot de réaction 23 est constitué d'un disque dont la partie périphérique est rabattue vers l'axe selon une courbure appropriée. La surface intérieure du capot de réaction 23 constitue une rampe 24 de forme concave tournée vers l'axe.

Des logements 25 sont prévus au dos du flasque 2. Ils sont répartis uniformément autour de corps annulaire 12 et sont, par exemple, au nombre de quatre. Ils sont délimités, d'une part, radialement par le corps annulaire 12 et par une paroi annulaire 26 concentrique et de diamètre supérieur au corps annulaire 12 et, d'autre part, latéralement par des parois 27, 28 groupées par paire. Les parois 27, 28 de chaque paire sont parallèles entre elles et sont également espacées de part et d'autre d'un plan radial. Dans chacun des logements 25, est fixée obliquement par rapport à l'axe de la poulie une rampe linéaire 29 dont la surface tournée vers l'axe est également tournée vers l'extérieur du flasque 2. Chacun des logements 25 reçoit une masselotte 30 dont la largeur est égale, au jeu près, à la distance qui sépare les parois 27, 28 de chaque paire. Dans le sens longitudinal, chaque masselotte 30 présente une forme allongée avec, à une première extrémité, une paroi oblique 31 de même obliquité par rapport à l'axe de la poulie que la rampe 29 et, à l'autre extrémité, une paroi 32 de forme arrondie. Chaque masselotte 30 est ainsi prévue pour coulisser radialement dans le logement 25 correspondant du flasque 2 et est guidée par les parois latérales 27, 28. Elle est aussi prévue pour être entraînée en rotation par le flasque 2 aux moyens des mêmes parois 27, 28. La forme arrondie de la paroi 32 est telle que chaque masselotte 30 ne soit en appui sur la surface intérieure 24 du capot de réaction 23 que par un seul point.

A la périphérie du flasque 2 et du côté opposé à son flanc tronconique 4, est fixé un corps annulaire 33 dont la longueur est sensiblement égale à celle du corps annulaire 12. Le capot de réaction 23 présente à sa périphérie une partie annulaire 34 tournée vers le flasque 2. Une membrane 35 fixée par une de ses faces contre la paroi interne du corps annulaire 33 part de cette paroi en s'éloignant du flasque 2, est cintrée et arrive contre la paroi externe de la partie annulaire 34 du capot de réaction 23 où elle est fixée par la même face. Les moyens de fixation de la membrane peuvent, par exemple, être constitués, en ce qui concerne la liaison membrane 35-corps annulaire 33, de vis réparties sur la circonférence du corps 33 et vissées dans la membrane 35, et, en ce qui concerne la liaison membrane 35-partie annulaire 34, d'un collier plaquant la membrane 35 sur le capot de réaction 23. Les liaisons de la membrane 35 avec le corps annulaire 33 et la partie annulaire 34 doivent être suffisamment rigides pour transmettre le couple d'entraînement du capot de réaction 23 au flasque mobile 2. La membrane 35 présente une section selon tout plan radial en forme de "C" inversé. Chaque aile de ce "C" peut glisser axialement l'une par rapport à l'autre avec un effort minimum correspondant à la résistance du matériau de la membrane à se cintrer. Par contre, la zone cintrée de la membrane offre une résistance importante à leur glissement en rotation l'une par rapport à l'autre.

Pour présenter ces caractéristiques mécaniques, la membrane est formée dans un caoutchouc qui peut être, par exemple, du type EPDM ou silicone, etc.

Le fonctionnement de la poulie représentée est le suivant. Le moyeu 7 étant solidaire de l'arbre d'entraînement 9, il tourne à sa vitesse. Il entraîne dans son mouvement de rotation le flasque 1 et le capot de réaction 23. Par la présence de la membrane 35, le capot de réaction 23 entraîne le flasque 2 qui tourne alors à la vitesse de l'ensemble et, en particulier, du flasque 1. Le flasque 2 tournant, les parois latérales 27, 28 des logements 25 entraînent les masselottes 30 en rotation.

A une vitesse de rotation de l'arbre d'entraînement 9 donnée, les masselottes 30 sont soumises à des forces centrifuges qui les font se déplacer radialement contre les rampes 23, 29. Du fait de l'obliquité de la paroi 31 de chaque masselotte 30, de la forme arrondie de la paroi opposée 32, de l'inclinaison de la rampe 29 et de la forme de la rampe 24 du capot de réaction 23, ces forces centrifuges ont des composantes axiales qui s'exercent sur chacune des rampes 23, 29. Le capot de réaction 23 étant fixe axialement par rapport au moyeu 7, ces composantes se réduisent à une poussée axiale sur la rampe 29 et, donc, sur le flasque 2. De ce fait, étant libre de coulisser sur la partie cylindrique 7, le flasque 2 se déplace axialement vers le flasque fixe 1, ce qui entraîne la compression du ressort 19 qui oppose alors une force de rappel sensiblement proportionnelle à son élongation. A une certaine vitesse de rotation, cette force de rappel a même amplitude, mais est de sens opposé, à la poussée axiale exercée par les masselottes 30. Ces deux forces s'annulent donc et un équilibre statique entre les deux flasques 1, 2 est atteint. La courroie trapézoïdale 6 engagée dans la gorge 5 formée par les deux flasques 1, 2 a son diamètre d'enroulement qui prend une valeur plus ou moins grande selon cet état d'équilibre.

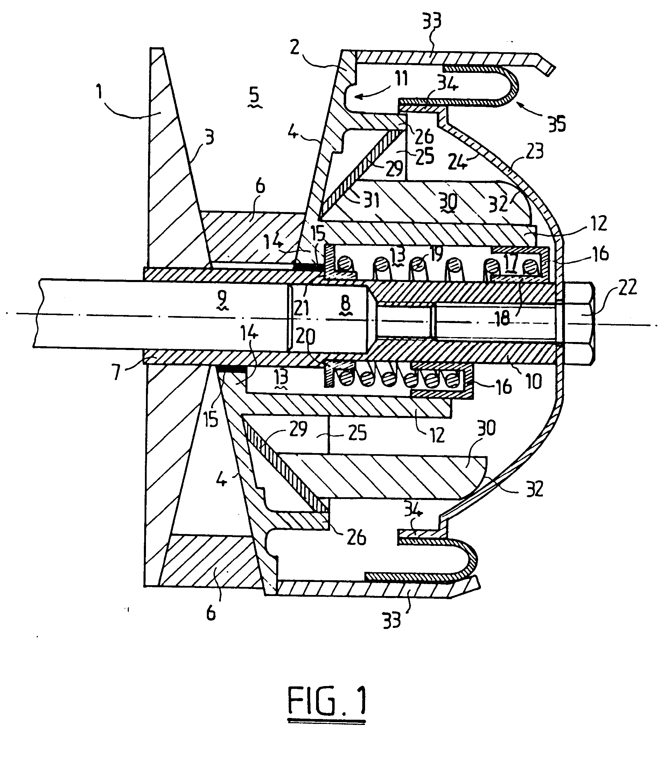

La Fig. 1 montre, par moitié, les deux états d'équilibre extrêmes d'une poulie menante selon l'invention.

En dynamique, lorsque la vitesse de rotation croît, les forces centrifuges sur les masselottes 30 augmentent proportionnellement. La poussée axiale de celles-ci sur les rampes 23, 29 augmente également et l'équilibre est déplacé vers un rapprochement des deux flasques 1, 2. Le diamètre d'enroulement de la courroie 6 croît donc. Inversement, lorsque la vitesse diminue, la poussée axiale des masselottes 30 s'affaiblit et l'équilibre est déplacé vers un éloignement des deux flasques 1, 2. Le diamètre d'enroulement de la courroie 6 décroit donc.

En fait, au contact de chacune des masselottes 30 avec les rampes 23, 29 correspondantes, sont engendrées des forces de frottement qui s'opposent au mouvement radial des masselottes 30 et au déplacement axial du flasque mobile 2. De même, celui-ci coulisse sur le moyeu 7 en engendrant des forces de frottement qui s'opposent à son déplacement axial. La membrane 35 s'oppose, elle aussi, au mouvement axial du flasque mobile 2.

Ces forces axiales engendrent un effet d'hystérésis dans le fonctionnement de la poulie. En effet, lorsque la vitesse augmente, le flasque 2 se déplace vers le flasque 1. Les forces axiales de réaction s'opposent à ce mouvement et se soustraient aux poussées axiales exercées par les masselottes 30. L'équilibre est donc déplacé vers un moindre rapprochement des deux flasques 1, 2 et le diamètre d'enroulement est donc inférieur à ce qu'il devrait être sans ces forces de frottement. Par contre, lorsque la vitesse de rotation décroît, le flasque mobile 2 se déplace en s'éloignant du flasque fixe 1. Les forces de frottement qui s'opposent à ce mouvement, tendent donc, dans ce cas, à maintenir les deux flasques 1, 2 rapprochés. Le diamètre d'enroulement est donc supérieur à ce qu'il devrait être sans ces forces de frottement.

Plus les forces axiales de réaction ont une valeur importante et plus l'effet d'hystérésis est important. Or, dans la poulie selon l'invention, ces forces axiales de réaction sont minimisées. En effet, le contact des masselottes 30 avec le capot de réaction 23 est ponctuel. Les forces de frottement y sont faibles. Le flasque mobile 2 coulisse sur des paliers 15 à faible coefficient de frottement. Et la membrane 35 exerce une faible réaction axiale pour se cintrer.

Dans les dispositifs de l'art antérieur, les moyens utilisés pour assurer la transmission du mouvement de rotation du capot de réaction (ou de l'arbre d'entraînement) au flasque mobile sont le siège de forces de frottement axiales importantes. Par rapport à ces moyens, l'utilisation d'une membrane telle que celle qui équipe une poulie menante selon l'invention présente un avantage certain car elle permet d'assurer une transmission du couple d'entraînement du capot de réaction au flasque mobile tout en diminuant l'effet d'hystérésis.

## Revendications

1. Poulie menante d'une transmission à vitesse variable dont la poulie menée est entraînée par une courroie de section trapézoïdale (6) la reliant à la poulie menante, ladite poulie menante comprenant deux flasques coaxiaux (1, 2) dont les flancs tronconiques (3, 4) sont en regard l'un de l'autre pour former entre eux une gorge (5) en forme de "V" dans laquelle est passée la courroie trapézoïdale (6), l'un (1) des flasques, dit flasque fixe, est fixé sur l'extrémité d'un moyeu (7) solidaire d'un arbre d'entraînement (9) de la poulie et l'autre flasque (2), dit flasque mobile, pouvant coulisser axialement sur ledit moyeu (7), un capot de réaction (23) fixé sur l'autre extrémité du moyeu (7), ledit capot de réaction (23) étant constitué d'un disque rabattu vers l'axe selon une courbure appropriée, la surface intérieure (24) du capot (23) étant tournée vers les deux flasques (1, 2), ledit flasque mobile (2) présentant, uniformément répartis autour de son axe, des logements (25) à l'intérieur de chacun desquels est fixée une rampe (29) linéaire oblique dont la surface tournée vers l'axe fait face à la surface interne (24) du capot de réaction (23) et qui présentent chacun des parois latérales (27, 28) constituant des guides radiaux en translation pour des masselottes (30) prenant appui, d'une part, sur chacune des rampes (29) des logements (25) du flasque mobile (2) et, d'autre part, contre la surface interne (24) du capot de réaction (23), les masselottes (30) étant soumises, lorsque l'arbre d'entraînement (9) de la poulie tourne, à des forces centrifuges qui font se déplacer le flasque mobile (2) vers le flasque fixe (1), un ressort de rappel (19) étant prévu pour exercer une force s'opposant au rapprochement des deux flasques (1, 2), caractérisée en ce que le flasque mobile (2) est rendu solidaire en rotation de l'arbre d'entraînement (9) au moyen d'une membrane (35) de caoutchouc qui le relie au capot de réaction (23) en présentant une partie de révolution dont la section est cintrée en forme de "C" ou de "C" inversé, chaque aile du "C" pouvant glisser axialement l'une par rapport à l'autre avec un effort miminum correspondant à la résistance du matériau de la membrane à se cintrer.

2. Poulie selon la revendication 1, caractérisée en ce que la membrane (35) est fixée par une de ses faces sur la paroi interne d'une partie annulaire (33) se trouvant à la périphérie du flasque mobile (2) et prolongeant celui-ci dans une direction opposée à son flanc tronconique (4) et, par la même face, sur une partie annulaire (34) à la périphérie du capot de réaction (23), la membrane (35) présentant une section selon tout plan radial en forme de "C" inversé.

3. Poulie selon la revendication 1, caractérisée en ce que la membrane (35) est fixée par une de ses faces sur la paroi interne d'une partie annulaire (33) se trouvant à la périphérie du flasque mobile (2) et prolongeant celui-ci dans une direction opposée à son flanc tronconique (4) et, par la même face, sur une partie annulaire (34) à la périphérie du capot de réaction (23), la membrane (35) présentant une section selon tout plan radial en forme de "C".

## Patentansprüche

1. Riemenscheibe zum Antrieb eines stufenlosen Getriebes, dessen angetriebene Welle durch einen Riemen (6) mit trapezförmigem Querschnitt angetrieben wird, der diese mit der Antriebs-Riemenscheibe verbindet, wobei die Riemenscheibe zwei koaxiale Scheiben (1, 2) aufweist, deren kegelstumpfförmige Seitenwände (3, 4) einander gegenüberliegen und dadurch zwischen sich eine V-förmige Nut bilden, in der der trapezförmige Riemen (6) geführt ist, eine (1) der Scheiben, feste Scheibe genannt, am Ende einer mit einer Antriebswelle (9) der Riemenscheibe verbundenen Nabe (7) befestigt ist, und die andere Scheibe (2), bewegliche Scheibe genannt, axial auf der Nabe (7) gleiten kann, wobei ferner auf dem anderen Ende der Nabe (7) eine Reaktionskappe (23) befestigt ist, die als entsprechend einem geeigneten Kurvenverlauf in Achsrichtung vorgezogene Platte ausgebildet ist, die innere Oberfläche (24) der Reaktionskappe (23) auf die beiden Scheiben (1, 2) gerichtet ist, die bewegliche Scheibe (2) gleichmäßig um ihre Achse verteilte Kammern (25) aufweist, in deren Inneren jeweils eine gerade, schräge Rampe (29) befestigt ist, dessen der Achse zugewandte Oberfläche der inneren Oberfläche (24) der Reaktionskappe (23) gegenüber liegt und von der jede Seitenwände (27, 28) aufweist, die radiale Verschiebe-Führungen für Schwungmassen (30) bilden, und einerseits auf jeder der Rampe (29) Aufnahmen (25) für die bewegliche Scheibe (2) und andererseits gegen die innere Oberfläche (24) der Reaktionskappe (23) Schwungmassen (30) tragen, die, wenn die Antriebswelle (9) der Riemenscheibe rotiert, Zentrifugalkräften ausgesetzt sind, die die bewegliche Scheibe (2) in Richtung auf die feste Scheibe (1) verschieben, wobei ferner eine Rückholfeder (19) vorgesehen ist, die eine Kraft entgegen der Annäherung der beiden Scheiben (1, 2) ausübt, **dadurch gekennzeichnet,** daß die bewegliche Scheibe (2) rundherum mit der Antriebswelle (9) über eine Gummimembran (35) verbunden ist, die sie mit der Reaktionskappe (23) verbindet und dadurch einen Teil des Umfangs bildet, dessen Querschnitt bogenförmig in Form eines "C" oder umgekehrten "C" ausgebildet ist, wobei beide Schenkel des "C" axial gegeneinander mit einer minimalen Reibung entsprechend dem Widerstand des Materials der Membran gegen die Bogenbildung gleiten können.

2. Riemenscheibe nach Anspruch 1, **dadurch gekennzeichnet,** daß die Membran (35) mit einer ihrer Flächen auf der Innenwand eines ringförmigen Teils (33), das sich am Umfang der beweglichen Scheibe (2) befindet und diese in Richtung entgegengesetzt zu ihrem kegelstumpfförmigen Flansch (4) verlängert, und mit derselben Fläche auf einem ringförmigen Teil (34) am Umfang der Reaktionskappe (23) befestigt ist, wobei die Membran (35) in der radialen Ebene den Querschnitt eines umgedrehten "C" aufweist.

3. Riemenscheibe nach Anspruch 1, **dadurch gekennzeichnet,** daß die Membran (35) mit einer ihrer Flächen auf der Innenwand eines ringförmigen Teils (33), das sich am Umfang der beweglichen Scheibe (2) befindet und diese in Richtung entgegengesetzt zu ihrem kegelstumpfförmigen Flansch (4) verlängert, und mit derselben Fläche auf einem ringförmigen Teil (34) am Umfang der Reaktionskappe (23) befestigt ist, wobei die Membran (35) in der radialen Ebene den Querschnitt eines "C" aufweist.

## Claims

1. A driving pulley for a variable speed transmission whose driven pulley is driven by means of a belt of trapezoidal cross-section (6), connecting it to the driving pulley, said driving pulley comprising two coaxial cheeks (1,2) whose truncated sidewalls (3,4) face each other so as to form a V-shaped groove (5) therebetween, in which the trapezoidal belt (6) runs, one of the cheeks (1), called the fixed cheek, being fixed to the end of a hub (7) which is integral with a drive shaft (9) of the pulley and the other cheek (2), called the movable cheek, being axially slidable on said hub (7), a reaction hood (23) being fixed to the other end of the hub (7), said reaction hood (23) being constituted by a disc which is cupped towards the axle with a suitable curvature, the inner surface (24) of the hood (23) facing the two cheeks (1,2), said movable cheek being provided with seatings (25), uniformly distributed around its axis, inside each of which a linear slanting ramp (29) is attached whose surface turned towards the axle faces the inner surface (24) of the reaction hood (23) and which is provided with sidewalls (27,28) which constitute radial translation guides for inertia blocks (30) which bear against, on the one hand, each of the ramps (29) of the seatings (25) on the movable cheek (2) and, on the other hand, the inner surface (24) of the reaction hood (23), the inertia blocks (30), when the drive shaft (9) of the pulley is turning, being subjected to centrifugal forces which cause the movable cheek (2) to move towards the fixed cheek (1), a return spring (19) being provided so as to exert a force opposing the mutual approach of the two cheeks (1,2), characterised in that the movable cheek (2) is joined in rotation with the drive shaft (9) by means of a rubber membrane (35) which connects it to the reaction hood (23) by being provided with a portion of revolution whose cross-section is bent in the shape of a "C" or an inverted "C", each arm of the "C" being axially slidable relative the other with a minimum force corresponding to the bending resistance of the material of the membrane.

2. A pulley according to claim 1, characterised in that one side of the membrane (35) is attached to the inner wall of an annular part (33) which is located at the periphery of the movable cheek (2) and which extends same in a direction opposite to that of its truncated sidewall (4), and the same side is attached to an annular part (34) at the periphery of the reaction hood (23), the membrane (35) having a cross-section in the form of an inverted "C" in all radial planes.

3. A pulley according to claim 1, characterised in that one side of the membrane (35) is attached to the inner wall of an annular part (33) which is located at the periphery of the movable cheek (2) and which extends same in a direction opposite to that of its truncated sidewall (4), and the same side is attached to an annular part (34) at the periphery of the reaction hood (23), the membrane (35) having a cross-section in the shape of a "C" in all radial planes.
